# EUROPEAN PATENT APPLICATION

(11) **EP 4 338 890 A1**
(43) Date of publication of application: **20.03.2024**
(21) Application number: 22020444.0
(22) Date of filing: 14.09.2022
(51) Int. Cl.: B25B 27/00, G01B 11/275

(54) **STAYSTRAIGHT DEVICE**

(71) Applicant: Adeokun, Lawrence O., London E14 6JZ (GB)
(72) Inventor: Adeokun, Lawrence O., London E14 6JZ (GB)

(57) **Abstract**

Handlebar-To-Wheel Alignment Device comprised primarily of a rigid structure that houses **Alignment Chamber 1**. The device is mounted to the cycle at a designated location with the **Alignment Chamber 1** activated to use in the process of aligning the cycle wheel.

## Description

The invention relates to Handlebar-To-Wheel alignment.

The object of the invention is to provide a Handlebar alignment tool that can be attached securely and firmly with no movement, thereby ensuring the tool does not move out of place during the process of use.

This is used to ensure the wheels are aligned properly in relation to the cycle. For accurate alignment, the central plane of the cycle (assuming the wheels are trued) must be parallel to the stem and perpendicular to the handlebar.

This invention provides a device made from a rigid material, with an alignment chamber. The alignment chamber encloses a light/beam source that could utilize lens/lenses to refine the light source.

The alignment chamber should an integrated part of the tool, although, it can be made as a removable part.

It is essential that the device is made from a rigid material as this is vital in attaining an accurate alignment.

The alignment chamber is located centrally on the spine of the tool.

The alignment chamber could be a shape different from the illustration.

The actual invention can be varied in dimensions, material or implementation, depending on the required application.

It can also be manufactured as a single integrated unit or employ modular and changeable parts.

Please note that the diagrams are not to scale and are for illustrative purposes only.

There is no circuitry shown for the purpose of clarity of the illustrations.

The following section is a detailed explanation of a preferred embodiment of the invention with reference to the following graphical illustrations.
FIGURE 1 shows a side view of an embodiment of the invention consisting of the alignment chamber and the clamp jaws opened.
FIGURE 2 shows a side view of an embodiment of the invention as per FIGURE 1 with the clamp jaws closed.

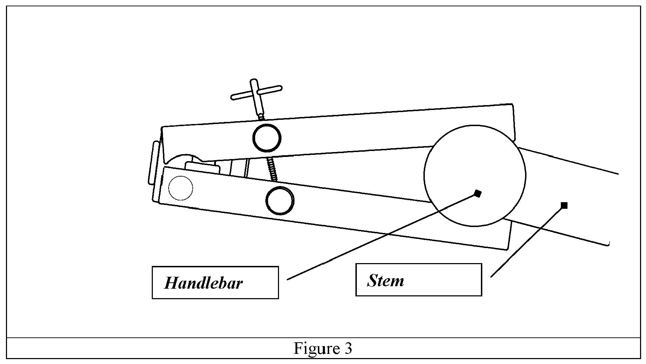

FIGURE 3 shows a side view of the embodiment of the invention when attached to a cycle handlebar.

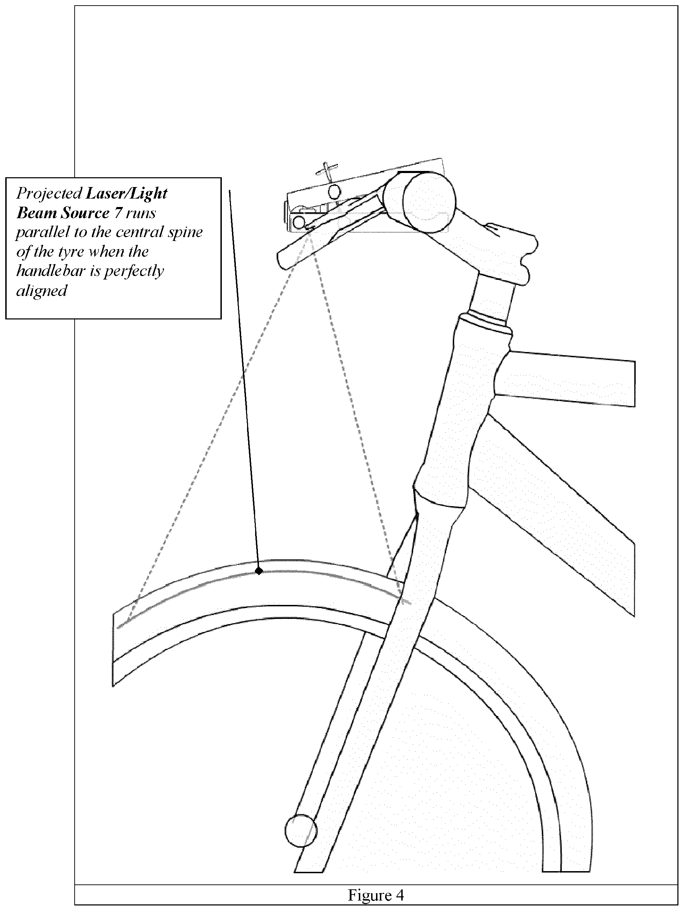

FIGURE 4 shows a side view of the embodiment of the invention when attached to a cycle handlebar. The light/beam source emitted is illustrated projecting on the central plane of the front wheel.

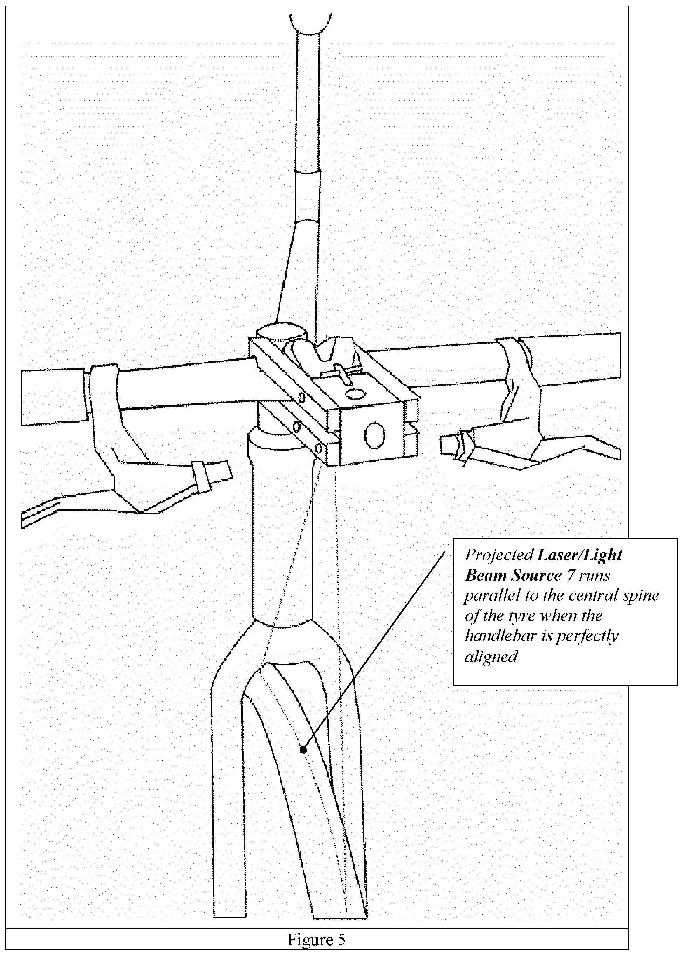

FIGURE 5 shows a top perspective view of an embodiment of the invention when attached to the cycle handlebar. The light/beam source emitted is illustrated projecting on the central plane of the front wheel.
FIGURE 6 shows a top view of an embodiment of the invention, illustrating the position of perfect alignment of the handlebar to the front wheel.

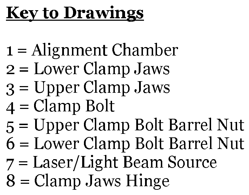

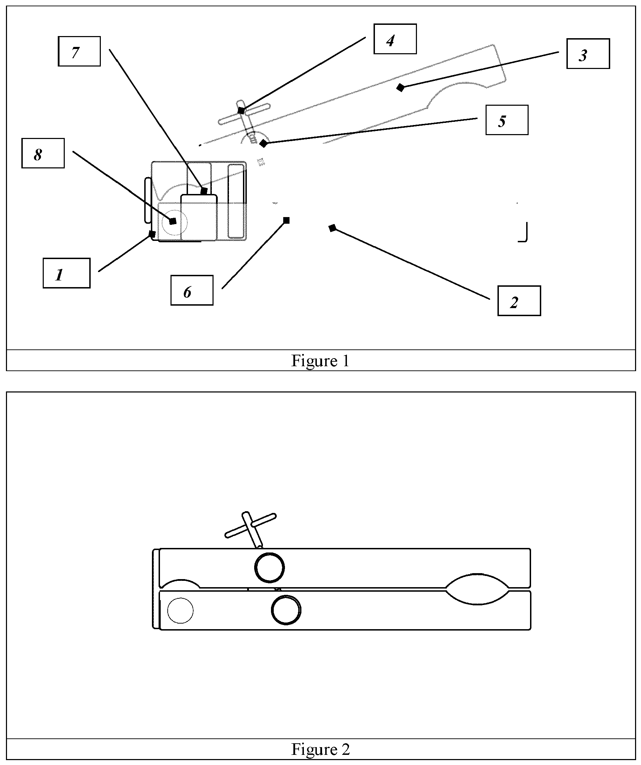

As shown in Figure 1, the Handlebar-To-Wheel alignment device comprises of at least one **Alignment Chamber 1.** The **Alignment Chamber 1** may be a permanent part of the device or be a removable mechanism.

This **Alignment Chamber 1** houses the **Laser/Light Beam Source 7,** as can be seen in Figure 1. A lens may be used to further refine the light beam. In this illustration, the **Laser/Light Beam Source 7** is assumed to be a line-laser module. The straight line emitted runs parallel to the spine tool.

The **Upper Clamp Jaws 3** houses the **Upper Clamp Bolt Barrel Nut 5.**

The **Lower clamp Jaws 2** houses the **Lower Clamp Bolt Barrel Nut 6.**

The **Upper Clamp Jaws 3** and the **Lower clamp Jaws 2** are connected by the **Clamp Jaws Hinge 8.**

The **Clamp Bolt 4** is threaded through the **Upper Clamp Bolt Barrel Nut 5** and **Lower Clamp Bolt Barrel Nut 6.**

The **Clamp Bolt 4** can be adjusted to open and close the jaws, thereby providing a firmly fixed grip that prevents the tool from moving out of place during use.

To achieve accurate alignment, the device is attached to the cycle at the stem mount region on the handlebar. The Clamp bolt 4 is tightened until the device is firmly fitted to the handlebar. The device should be ideally parallel to the ground when looking from the side.

The **Laser/Light Beam Source 7** is then activated and a line will be projected on the wheel. If the device is accurate, the line projected will run parallel to the spine of the device.

The central seam/plane of the tyre is then aligned parallel to the stem using the projected light (in this case a laser line) as a guide. Once aligned, the projected line will run parallel to the seam/plane of the tyre.

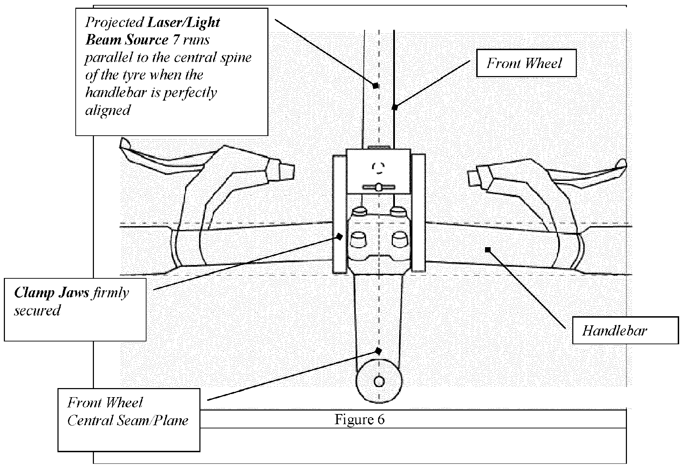

Figure 6 shows an illustration of an aligned front end with the **Laser/Light Beam Source 7** activated and a line projected on the front wheel.

The handlebar must be secured flush in place to the stem using the accompanying face-plate.

Although the **Alignment Chamber 1** is shown to be centrally aligned along the spine of the stem, it can be located off-centre, as long as it still projects a light beam that runs parallel to the spine.

## Claims

1. A device for aligning the wheels on a cycle that comprises of a rigid body, mounting clamp(s) and Laser/light beam source(s), mounted on the cycle with the projected laser/light beam running parallel to the central plane of the wheels to ensure the central plane of the wheels are properly aligned with the cycle and handlebar.

2. A device as claimed in Claim 1 where the mounting clamp(s) enables tight and secure grip when attached to the designated part of the cycle.

3. A device as claimed in Claim 1 or Claim 2 where the device can be mounted in a fixed position on a designated part of the cycle (handlebar, saddle rail, handlebar stem or any other part of the cycle).

4. A device as claimed in any preceding claim, where the device employs the use of a combination of Laser/Light beam source/alignment gauge/screen/aperture connected/integral to the device, in order to align the cycle (and related constituent parts) along a straight central plane.

5. A device as claimed in any preceding claim where the mounting clamp(s) is an integral or removable part of the device.

6. A device as claimed in any preceding claim, which is made from a rigid inflexible/minimal flex material.

7. A device as claimed in any preceding claim where the constituent parts may be detachable.

8. A device substantially as described above and in the accompanying drawings.
